# EUROPEAN PATENT APPLICATION

(11) **EP 1 103 337 A1**
(43) Date of publication of application: **30.05.2001**
(21) Application number: 00310396.7
(22) Date of filing: 23.11.2000
(51) Int. Cl.: B23K 35/26, C22C 13/02

(54) **Tin-bismuth-based lead-free solder**

(30) Priority: 25.11.1999 JP 33443599
(71) Applicant: Mitsui Mining & Smelting Co., Ltd, Tokyo 141-8584 (JP)
(72) Inventor: Matsunaga, J., Mitsui Mining & Smelting Co, Ltd., Ageo-chi, Saitama (JP); Nakahara, Y., Mitsui Mining & Smelting Co, Ltd., Ageo-chi, Saitama (JP); Ninomiya, R., Mitsui Mining & Smelting Co, Ltd., Ageo-chi, Saitama (JP)
(74) Representative: Whalley, Kevin

(57) **Abstract**

A tin-bismuth-based lead-free solder having elongation essentially consisting of (a) 45 to 65, 70 or 75 % in weight of bismuth, (b) 0.003 to 0.1 % in weight of phosphorus and (c) a balance of tin. The solder has more excellent elongation compared with the conventional lead-containing or lead-free solder at least in the above-identified specific composition.

## Description

### BACKGROUND OF THE INVENTION

### (a) Field of the Invention

The present invention relates to a tin-bismuth-based lead-free solder, and more in detail to the tin-bismuth-based lead-free solder having excellent mechanical characteristics, especially excellent elongation in a relatively broad composition range.

### (b) Description of the Related Art

Although a tin-lead-based alloy is widely used as a representative solder, a lead-free solder is demanded for overcoming the recent global environmental problems.

A tin-silver-based or tin-zinc-based solder is proposed for responding to the above demand. However, the solder has a higher melting point than that of the tin-lead-based solder, and the addition of another element for decreasing the melting point deteriorates the mechanical characteristics.

An environment-friendly lead-free tin-bismuth-based solder is proposed and used. Although the solder containing no lead has the higher safety than that of the tin-lead-based solder, the mechanical characteristics of the tin-bismuth-based solder are poor. For example, the malfunction of an electronic device such as a circuit board substrate containing the solder may take place after the repeated operations for a relatively long period of time due to the reduction of the reliability. Accordingly, the improvement of the mechanical characteristics including the elongation has been attempted by adding an additional element to the tin-bismuth-based lead-free solder.

For example, a solder prepared by adding silver to the tin-bismuth-based lead-free solder is proposed in JP-A-8(1996)-252688. However, in the solder, addition of a relatively large amount of the silver, that is, 0.1 to 2.5 % in weight is required as the additional element, and an adverse effect may be exerted on the characteristics of the tin-bismuth-based lead-free solder.

### SUMMARY OF THE INVENTION

In view of the foregoing, an object of the present invention is to provide to a tin-bismuth-based lead-free solder of which mechanical characteristics can be improved by addition of a slight amount of an additional element.

The present invention provides, in a first aspect thereof, a tin-bismuth-based lead-free solder having elongation essentially consisting of (a) 45 to 75 % in weight of bismuth, (b) 0.003 to 0.1 % in weight of phosphorus and (c) a balance of tin.

In accordance with the aspect of the present invention, the elongation is generally improved compared with the conventional tin-bismuth-based lead-free solder having no phosphorus.

The present invention provides, in a second aspect thereof, a tin-bismuth-based lead-free solder having elongation essentially consisting of (a) 45 to 70 % in weight of bismuth, (b) 0.003 to 0.1 % in weight of phosphorus and (c) a balance of tin.

In accordance with the aspect of the present invention, the elongation is improved compared with Sn-37Pb which is a typical lead-based solder.

The present invention provides, in a third aspect thereof, a tin-bismuth-based lead-free solder having elongation essentially consisting of (a) 45 to 65 % in weight of bismuth, (b) 0.003 to 0.1 % in weight of phosphorus and (c) a balance of tin.

In accordance with the aspect of the present invention, the elongation is improved compared with Sn-58Bi-1Ag which is one of the conventional tin- bismuth-based lead-free solder.

Since, in these aspects, the amount of the phosphorus added to the master alloy is as low as to 0.003 to 0.1 % in weight, the addition of the phosphorus seldom exerts a harmful influence to the characteristics other than the elongation.

The above and other objects, features and advantages of the present invention will be more apparent from the following description.

### BRIEF DESCRIPTION OF DRAWINGS

Fig.1 is a graph showing relations between amounts of bismuth and fracture elongations of a tin-bismuth-based lead-free solder containing phosphorus in Example 1 and another tin-bismuth-based lead-free solder having no phosphorus.

Fig.2 is a graph showing a relation between an amount of phosphorus added to Sn-58Bi and a fracture elongation thereof in Example 2.

### PREFERRED EMBODIMENTS OF THE INVENTION

Now, the present invention is more specifically described.

Since the lead component in a conventional tin-lead based solder frequently used therein pollutes the environment and exerts a harmful influence to a human body, a lead-free solder has been demanded and realized. A tin-bismuth based lead-free solder is proposed as the lead-free solder. However, the solder has an insufficient elongation and the fundamental characteristics of the solder are deteriorated even if the lead-free solder can be realized.

Although the improvement of the characteristics of the solders has been attempted by adding the above-mentioned silver, copper and indium, each of the solders having the improved characteristics still has a defect and is not in a practical use.

The solder of the present invention is prepared by adding a small amount of the phosphorus as an additional element to the lead-free solder having the tin and the bismuth as the main components, that may solve the problems unsolvable by the tin-bismuth based lead-free solder having the conventional additional element.

At first, in accordance with the preferred embodiment of the present invention, a higher degree of the elongation can be obtained by using a specific amount of the phosphorus as the additional element, that cannot be obtained by the conventional tin-bismuth based lead-free solder.

Secondly, the elongation of the solder of the preferred embodiment of the present invention can be maintained, in a wider tin-containing range, similar to or more than that of the tin-bismuth based lead-free solder having the silver as the additional element. In the conventional tin-bismuth-silver based solder, the tin-containing range in which the elongation exceeds that of the tin-lead based solder is relatively small extending from about 40 to 57 % in weight. On the other hand, in the solder of the preferred embodiment of the present invention, the tin-containing range in which the elongation exceeds that of the tin-lead based solder is relatively large extending substantially from 30 to 55 % in weight by the addition of the phosphorus. Accordingly, the selection freedom for the tin-containing amount increases.

Thirdly, the elongation of the solder can be improved without deteriorating the characteristics of the tin-bismuth based lead-free solder acting as the master alloy because the addition of the phosphorus is extremely small as low as to 0.003 to 0.1 % in weight.

Fourthly, the solder of the preferred embodiment of the present invention is economical because the relatively expensive silver is not used, thereby reducing a burden in cost even if a lager amount of the solder is manufactured.

As described earlier, the amount of the phosphorus added is between 0.003 and 0.1 % in weight with respect to the total weight of the solder. When the amount is below 0.003 % in weight, the effect of the addition is scarcely observed, and the elongation thereof is lower than that of the Sn-37Pb which is the typical lead-based solder. On the other hand, when the amount exceeds 0.1 % in weight, the addition of the phosphorus produces a reverse effect on the tin-bismuth based lead-free solder to reduce the elongation thereof lower than that of the Sn-37Pb, and a relatively larger amount of the phosphorus may deteriorate the characteristics of the tin-bismuth-based alloy.

The tin-bismuth based lead-free solder of the present invention may be prepared by using a method similar to a conventional method, for example, by melting the tin metal, the bismuth metal and the tin-phosphorus master alloy in a specific rate and solidifying the mixture after the cooling.

The tin-bismuth based lead-free solder prepared in this manner has the fracture elongation between about 27 and 42 % and the melting point between about 139 and 179 °C depending on the composition, and further has the more excellent elongation and machinability than the conventional tin-bismuth based lead-free solder.

The term "fracture elongation" employed in this text refers to an increase of a test piece, expressed in percentage with respect to the original length of the test piece, at the fracture thereof.

An especially desirable composition is Sn-50Bi-0.05P, and its fracture elongation elevates up to 41 % and its melting point becomes 150 °C.

Although Examples of the tin-bismuth based lead-free solder of the present invention will be described, the present invention shall not be deemed to be restricted thereto.

### Example 1 and Comparative Exnmple 1

After a total weight of 10 kg of a tin metal, a bismuth metal and a tin-phosphorus master alloy in a ratio specified in Table 1 (top two molds were Comparative Examples out of the specific composition of the present invention, and bottom three molds were Examples inside of the specific composition) was weighed, the mixture thereof was melted in a graphite melting pot in an electric furnace in an ambient atmosphere at about 300 °C. The melted mixture was allowed to stand for cooling, and the melting point thereof (°C) was measured by using a thermocouple. After the re-melted mixture was sufficiently agitated for removing or reducing the gravity segregation, the mixture was cast to a Sn-Bi-P mold having inner dimensions of a length of 150 mm, a width of 60 mm, a height of 150 mm and a cast thickness of 10 mm. Then, a test piece taken off from the bottom portion of the mold or the solder by mechanical processing was evaluated for measuring the fracture elongation (%) at a tensile rate of 0.5 mm/min. in a test device.

In this test, the test piece was fixed to the grabbing section of the test device. The tensile force was applied to the test piece as uniformly as possible in a longitudinal direction in an ambient temperature.

**Table 1**

| Bismuth (weight %) | Tin (weight %) | Fracture Elongation (%) | | Melting Point (°C) | |
|---|---|---|---|---|---|
| | | P-addition of 0.05 weight % | No P addition | P-addition of 0.05 weight % | No P Addition |
| 20 | 80 | 17 | 24 | 201 | 201 |
| 40 | 60 | 23 | 33 | 168 | 168 |
| 50 | 50 | 41 | 33 | 150 | 150 |
| 58 | 42 | 32 | 19 | 139 | 139 |
| 70 | 30 | 22 | 18 | 179 | 179 |

### Comparative Example 2

A similar test mold was cast in accordance with the same procedures as those of Example 1 except that no phosphorus was added to the mold.

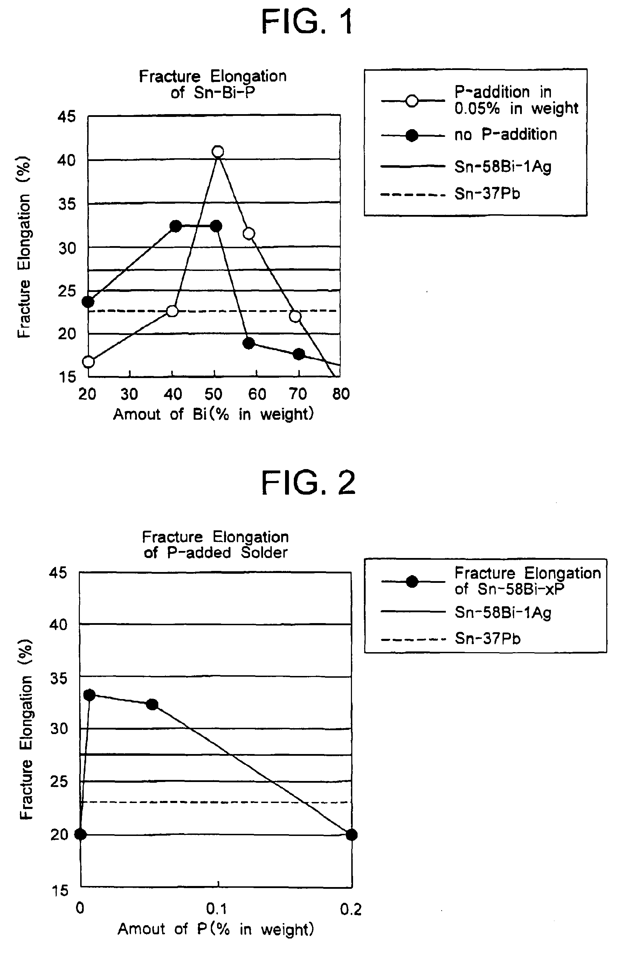

The measured fracture elongations (%) and the measured melting points (°C) of each solder obtained in Example 1 and Comparative Examples 1 and 2 are shown in Table 1. The relations between the amounts of the bismuth and the fracture elongations are shown in a graph of Fig.1. In this graph, the fracture elongations of Sn-37Pb and of Sn-58Bi-lAg which was prepared by the same procedures as those of Example 1 except that the tin-phosphorus master alloy was replaced with and of Ag are also shown as a reference. As shown in Table 1, the melting points of the phosphorus-added solders and the phosphorus-added solders are substantially same probably because the amount of the phosphorus added to the solders is extremely small.

As apparent from Table 1 and Fig.1, the elongation of the phosphorus-added solders in the bismuth range of 45 to 75 % in weight are improved compared with the corresponding phosphorus-free solders.

Further, as shown in Fig. 1, the elongation of the solder of Example 1 having the bismuth amount between 45 and 70 % in weight is improved compared with Sn-37Pb which is a typical solder, and that of the solder of Example 1 having the bismuth amount between 45 and 65 % in weight is improved compared with Sn-58Bi-lAg which is one of the conventional tin-bismuth-based lead-free solder.

### Example 2 and Comparative Example 3

Four pieces of tin-bismuth-based lead-free solders were prepared similarly to Example 1, each having a fixed bismuth amount of 58 % in weight and having amounts of phosphorus of 0.001 %, 0.005 %, 0.05 % and 0.2 % in weight.

Fracture elongations (%) and melting points (°C) of the four solders were measured similarly to Example 1, and the results are shown in Table 2. The relations between the amounts of the phosphorus and the fracture elongations are shown in a graph of Fig.2. In this graph, the fracture elongations of the Sn-58Bi-lAg and the Sn-37Pb are also shown as a reference. As shown in Table 2, the melting points of all the solders are the same probably because the amount of the phosphorus added to the solders is extremely small.

As apparent from Table 2 and Fig.2, the elongations of the solders having the phosphorus in the range between 0.003 and 0.1 % in weight are improved compared with the corresponding tin-bismuth-based phosphorus-free solders.

Since the above embodiments are described only for examples, the present invention is not limited to the above embodiments and various modifications or alternations can be easily made therefrom by those skilled in the art without departing from the scope of the present invention.

**Table 2**

| Amount of Phosphorus (% in weight) | Fracture Elongation (%) | Melting Point (°C) |
|---|---|---|
| 0.001 | 20 | 139 |
| 0.005 | 33 | 139 |
| 0.05 | 32 | 139 |
| 0.2 | 20 | 139 |

## Claims

1. A tin-bismuth-based lead-free solder having elongation essentially consisting of (a) 45 to 75 % in weight of bismuth, (b) 0.003 to 0.1 % in weight of phosphorus and (c) a balance of tin.

2. A tin-bismuth-based lead-free solder having elongation essentially consisting of (a) 45 to 70 % in weight of bismuth, (b) 0.003 to 0.1 % in weight of phosphorus and (c) a balance of tin.

3. A tin-bismuth-based lead-free solder having elongation essentially consisting of (a) 45 to 65 % in weight of bismuth, (b) 0.003 to 0.1 % in weight of phosphorus and (c) a balance of tin.
